# EUROPÄISCHE PATENTSCHRIFT

(11) **EP 3 945 750 B1**
(45) Veröffentlichungstag und Bekanntmachung des Hinweises auf die Patenterteilung: **17.01.2024**
(21) Anmeldenummer: 21166013.9
(22) Anmeldetag: 30.03.2021
(51) Int. Cl.: H05B 45/345, H05B 45/35, H05B 47/17, H05B 47/21, H05B 47/175, H02J 9/02, H02J 13/00

(54) **LEUCHTE UND BELEUCHTUNGSSYSTEM**
LIGHT AND LIGHTING SYSTEM
LUMINAIRE ET SYSTÈME D'ÉCLAIRAGE

(30) Priorität: 29.07.2020 DE 102020209562
(43) Veröffentlichungstag der Anmeldung: 02.02.2022
(73) Patentinhaber: Eaton Intelligent Power Limited, Dublin 4 (IE)
(72) Erfinder: PRASUHN, Jürgen, 59494 Soest (DE)
(74) Vertreter: Epping - Hermann - Fischer

(56) Entgegenhaltungen:
- EP-A2- 2 547 174
- WO-A1-2016/191781
- DE-A1-102012 101 950
- US-A1- 2011 068 702

## Beschreibung

Die Erfindung betrifft eine Leuchte gemäß Patentanspruch 1, insbesondere Rettungszeichen-, Sicherheits- oder Notleuchte, mit LEDs, einem LED-Treiber und einer Überwachungs-und Steuereinheit, wobei die Leuchte in verschiedenen auswählbaren Betätigungsmoden, im Nachfolgenden auch Moden genannt, einsetzbar ist und wenigstens einen Anschluss zur Spannungsversorgung und zum Datenaustausch aufweist. Solche Leuchten sind in der Regel Teil eines Beleuchtungssystems, beispielsweise in einem Gebäude, wobei die Leuchten über eine Zentraleinheit des Beleuchtungssystems überwacht und versorgt werden. Die verschiedenen Leuchten dienen insbesondere zur Anzeige eines Fluchtwegs, als Sicherheitsbeleuchtung oder dergleichen.

Die Leuchten sind mit der Zentraleinheit über wenigstens einen Anschluss zur Spannungsversorgung und zum Datenaustausch verbunden. Ein solcher Datenaustausch dient insbesondere dazu, beispielsweise an die Leuchte kurze Strompulse oder Impulssequenzen als Abfrage zu übermitteln, um eine Rückmeldung von der Leuchte hinsichtlich beispielsweise einer Statusinformation der Leuchte zu erhalten. Solche Beleuchtungssysteme sind im Allgemeinen als Zentralsicherheitsbeleuchtungssysteme oder Zentralüberwachungssysteme bekannt. Eine serielle, digitale Information von jeder Last im Beleuchtungssystem wird dekodiert und auf diese Weise ist ein kompletter Status von allen angeschlossenen Lasten abfragbar und speicher- oder darstellbar. Solche Lasten sind die oben genannten Leuchten, wie Sicherheitsleuchten, Rettungszeichenleuchten, Notleuchten, Fluchtwegleuchten oder dergleichen.

Bei neuen Beleuchtungssystemen müssen die Leuchten zusätzliche Anforderungen erfüllen. Beispielsweise müssen alle Notbeleuchtungssysteme adaptiv und dynamisch entsprechende Rettungs- oder Fluchtwege anzeigen können, um neuen Anforderungen zu genügen. Eine solche Anforderung ist beispielsweise eine entsprechende Reaktion auf eine Feuermeldung oder dergleichen innerhalb des Gebäudes. Das Auftreten eines Feuers kann eine oder mehrere dynamische Änderung/Änderungen eines Fluchtweges und eine entsprechende Anpassung der Fluchtwegleitung erforderlich machen. Dazu werden beispielsweise einzelne Leuchten in anderen Betätigungsoden betrieben, wie Blinkmodus, Aufblitzmodus, Dimmmodus oder Einschalt- oder Ausschaltmodus. Die Betätigungsmoden können mittels Steuerinformationen über separate Steuereingänge an den Leuchten, aber alternativ oder zusätzlich auch über andere Daten- / Informationskanäle wie Funk, Datenleitung oder Versorgungsspannungsbeeinflussung konfiguriert werden.

Bei einem entsprechenden Modus wird dann analog der Laststrom einer jeden Leuchte pulsieren oder sich in anderer Weise ändern, je nach ausgewähltem Betätigungsmodus. Dieses Pulsieren des Laststroms führt allerdings zu erheblichen Schwierigkeiten bei der obengenannten Kommunikation über Stromimpulse mit den entsprechenden Leuchten. D.h., die entsprechenden Daten-Stromimpulse müssen parallel zu den Last-Stromimpulsen übertragen werden, die beispielsweise ein Aufblitzen oder Blinken der Leuchten ermöglichen. D.h., die entsprechenden Stromimpulse für den Betriebsmodus und Stromimpulse zum Datenaustausch stören sich gegenseitig, so dass unter solchen Bedingungen keine zuverlässige und last- /betätigungsmodeunabhängige entsprechende Dekodierung der von den Leuchten abgefragten Daten möglich ist.

Es gibt zwar Alternativen zum Datenaustausch, wie beispielsweise sogenannte Power-Line-Kommunikation, wobei diese allerdings mit erheblichem technischen und kostenmäßigem Aufwand verbunden ist.

Aus der DE 10 2012 101 950 A1 ist eine Sicherheitsleuchte mit LEDs bekannt, wobei in einem Innenraum der Sicherheitsleuchte ein Leuchtenmodul mit einem elektronischen Betriebsgerät zum elektrischen Versorgen der LEDs vorgesehen ist. Es kann zwischen einem Betriebsmodus mit konstantem Strom und erhöhter Helligkeit und einem Betriebsmodus mit variablem Strom umgeschaltet werden.

Der Erfindung liegt die Aufgabe zugrunde, eine Leuchte der eingangs genannten Art in einfacher und kostengünstiger Weise zum Datenaustausch mittels Stromimpulsen auszubilden, wobei jede einzelne Leuchte keinen Einschränkungen hinsichtlich Dauer, Bandbreite oder Zeitsteuerung bei der entsprechenden Übermittlung der Stromimpulse zwischen Leuchte und Zentraleinheit aufweisen soll.

Nach Erfindung ist es ebenfalls nicht nötig, dass alle im Beleuchtungssystem enthaltenen Leuchten in spezieller Weise in ihren Betriebsmoden synchronisiert werden müssen, um beispielsweise eine entsprechende Stromimpulskommunikation in engen Zeitintervallen durchzuführen, in denen alle Leuchten im gleichen Status sind. Auch eine solche Lösung würde die Bandbreite der Kommunikation erheblich einschränken und erfordert außerdem, dass alle adaptiven oder dynamischen Leuchten eines Endstromkreises im gleichen Operationsmodus sind. Dies ist nicht immer möglich.

Erfindungsgemäß weist die Leuchte zusätzlich eine Lastausgleichseinrichtung auf, durch welche zusammen mit den LEDs als Gesamtlast eine im Wesentlichen konstante Stromaufnahme der Leuchte und insbesondere des LED-Treibers einstellbar ist.

Dadurch besteht die Möglichkeit, die Kommunikation zwischen den Leuchten und der Zentraleinheit durch Stromimpulse durchzuführen, was erheblich preiswerter und sicherer ist, als alternative Kommunikationslösungen, siehe beispielsweise die Power-Line-Kommunikation. Die Lastausgleichseinrichtung dient dazu, bei Änderungen des Laststroms durch die LEDs diesen entsprechend auszugleichen, sodass im Wesentlichen ein konstanter Strom fließt bzw. eine gleichbleibende Last simuliert wird. Ist eine Leuchte beispielsweise im Aufblitz- oder Blinkmodus, übernimmt die Lastausgleichseinrichtung den entsprechenden Laststrom während der Ausschaltphasen der entsprechenden LEDs.

Um die Leuchte in einfacher Weise mit einer entsprechenden Notfallstelle verbinden zu können, kann diese einen insbesondere potentialfreien Anschluss für diese Notfallstelle aufweisen. Eine solche Notfallstelle wäre beispielsweise eine Brandmeldestelle. Erfasst diese einen Brand oder eine andere Gefährdungssituation an einer bestimmten Stelle in einem Gebäude, wird dynamisch beispielsweise eine Fluchtwegleitung geändert, um der Brandstelle bzw. einem Feuer oder anderen Gefahr sicher ausweichen zu können. Dazu werden entsprechende Daten von der Notfallstelle an den Anschluss der Leuchte übermittelt. Diese ändert dann ihren Status in beispielsweise Blinkmodus, Aufblitzmodus oder auch Ausschaltmodus. Es besteht ebenfalls die Möglichkeit, statt eines Ausschaltens der entsprechenden Leuchte beispielsweise ein rotes, kreuzähnliches Piktogramm aufleuchten zu lassen, das eine entsprechende Fluchtrichtungsanzeige einer solchen Leuchte ungültig macht, so dass sich Personen innerhalb des Gebäudes entlang anderer Leuchten, insbesondere Rettungszeichenleuchten und Fluchtwegleuchten, an eine sichere Stelle unter Umgehung des entsprechenden Brand- oder Gefahrenherdes begeben.

Wie bereits oben ausgeführt, soll auch die erfindungsgemäße Leuchte von der Zentraleinheit des Beleuchtungssystems abfragbar sein. Dies erfolgt entsprechend über die Stromimpulse, Sequenzen von Stromimpulsen oder entsprechender Datenpakete. Diese sind von der Leuchte an die Zentraleinheit übermittelbar.

Entsprechende Stromimpulse oder Belastungsstromimpulse sind beispielsweise in der EP 0 980 131 oder EP 1 170 849 beschrieben. Die Erzeugung von einem oder mehreren Stromimpulsen auf einer Versorgungsleitungsverbindung ist in der EP 2 194 762 und eine Anzahl von Belastungsimpulsen sind in der EP 2 704 332 beschrieben. Auch bei der vorliegenden Erfindung kann entsprechend die Übertragung solcher Stromimpulse, Sequenzen von Stromimpulsen oder Datenpaketen in dieser Art erfolgen.

Für die erfindungsgemäße Leuchte sind unterschiedliche Moden denkbar, die beispielsweise aus Blinkmodus, Aufblitzmodus, Dimmmodus, Einschaltmodus, Ausschaltmodus oder dergleichen auswählbar sind.

Ein entsprechender Modus ist ggf. über eine Eingabe am potenzialfreien Anschluss auswählbar, so dass der entsprechende Modus beispielsweise von der Notfallstelle her initiiert wird.

Je nach Modus übernimmt die Lastausgleichseinrichtung einen bestimmten Teil der Last, so dass sich insgesamt ein im Wesentlichen konstanter Laststrom ergibt. Ist beispielsweise eine Leuchte im Dimmmodus und verbraucht einen reduzierten Laststrom, so kann die Lastausgleichseinrichtung einen bestimmten Teil-Strom verbrauchen, so dass sich insgesamt ein Laststrom ergibt, der ohne diesen besonderen Modus durch die LEDs der Leuchte fließen würde.

Erfindungsgemäß besteht die Möglichkeit, siehe auch die obigen Ausführungen, dass auf eine entsprechende Abfrage von Seiten der Zentralstelle/-einheit her, eine Antwort in Form eines Datenpakets von der Leuchte an die Zentralstelle/-einheit übermittelbar ist.

Die Lastenausgleichseinrichtung kann beispielsweise eine steuerbare Stromsenke sein. Diese ist entsprechend so ausgebildet, dass ein Laststrom in einem definierten Bereich eingestellt wird oder eine entsprechende elektronische Regelung erfolgt, so dass jeweils die Gesamtlast von Lastausgleichseinrichtung und LEDs der Leuchte zu einem im Wesentlichen konstanten Laststrom führt. In diesem Zusammenhang sei noch darauf verwiesen, dass die steuerbare Stromsenke entsprechend zum Verbrauch der Leuchten ausgebildet ist. Beispielsweise haben Rettungszeichenleuchten je nach Größe und Ausbildung einen typischen Verbrauch von 4 bis 12 Watt. Sie verwenden Gruppen mit einer Anzahl von LEDs als Lichtquellen, die normalerweise seriell verbunden sind und mit einem konstanten Strom versorgt werden. Für die oben beschriebenen dynamischen und adaptiven Merkmale ist es erforderlich, dass die Ausgabe des LED-Treibers als Leistungsversorgung ein- oder ausgeschaltet wird oder zumindest die Helligkeit der LEDs durch Pulsbreitenmodulation (PWM) und/oder Konstantstromveränderung modifiziert wird zwischen Werten von 0 % bis 100 %. Entsprechend zu dieser Änderung des Verbrauchs der LEDs wird die Lastausgleichseinrichtung angesteuert und kontrolliert.

Ein einfaches Ausführungsbeispiel für eine solche steuerbare Stromsenke als Lastausgleichseinrichtung ist eine Stromsenke, welche eine Bypass-Einrichtung und eine Steuerelektronik aufweist. Durch die Bypass-Einrichtung wird Strom, der den LEDs nicht zugeführt wird, im entsprechenden Modus umgeleitet und entsprechend verbraucht, so dass insgesamt eine konstante Stromversorgung von Seiten des LED-Treibers her aufrechterhalten wird.

Eine entsprechende Bypass-Einrichtung kann eine Schalteinrichtung und einen Lastkreis aufweisen. In einem solchen Lastkreis ist beispielsweise ein Widerstand, ein bipolarer Transistor, ein MOSFET-Transistor, ein IGBT oder dergleichen angeordnet.

Es besteht die Möglichkeit, die Lastausgleichseinrichtung entweder auf einer Eingangs- oder auch auf einer Ausgangsseite des LED-Treibers anzuordnen. Bevorzugt kann die Lastausgleichseinrichtung auf einer Ausgangsseite des LED-Treibers zwischen diesem und den LEDs verschaltet sein. Dadurch ist es einfacher, den Verbrauch zwischen LEDs und Lastausgleichseinrichtung bzw. Stromsenke auszugleichen.

In bestimmten Fällen kann es sich von Vorteil erweisen, wenn die Lastausgleichseinrichtung abschaltbar ist. Dies gilt beispielsweise dann, wenn die Leuchte an sich ausgeschaltet ist oder wenn beispielsweise ein Funktionstest der LEDs oder des zugehörigen Treibers stattfindet. Ansonsten wäre eine Beeinflussung der Testergebnisse möglich.

Weiterhin besteht die Möglichkeit, dass die Lastausgleichseinrichtung direkt ein Umschalten von Einschalt- oder Ausschaltmodus in Blink-, Dimm-, Aufblitzmodus oder der gleichen ermöglicht. Bei einem solchen Umschalten wird dann immer die Lastausgleichseinrichtung aktiv, um zusammen mit den LEDs einen im wesentlichen konstanten Laststrom zu erzeugen.

Die Erfindung betrifft ebenfalls ein entsprechendes Beleuchtungssystem mit einer Zentraleinheit, die mit Netzspannungs- und Notversorgungsspannungsquelle sowie mit einer Anzahl von Leuchten der vorangehend beschriebenen Art verbunden ist. Die Leuchten sind dabei parallel mit der Zentraleinheit verbunden, wobei dies über zumindest eine Spannungs- und Datenverbindungsleitung erfolgt. Es ist ebenfalls denkbar, dass eine zusätzliche Datenverbindungsleitung vorgesehen ist. Die entsprechende Netzspannung ist eine Wechselspannung und die Notversorgungsspannung ist in der Regel eine Gleichspannung von einer insbesondere aufladbaren Batterie oder dergleichen.

Im Folgenden wir die Erfindung anhand der beigefügten Figuren näher erläutert.

Es zeigen:
- Fig. 1: eine erfindungsgemäße Leuchte mit Verbindung zu einer Brandmeldestelle,
und
- Fig. 2: eine Vielzahl der Leuchten nach Figur 1 in einem Beleuchtungssystem mit einer Zentraleinheit.

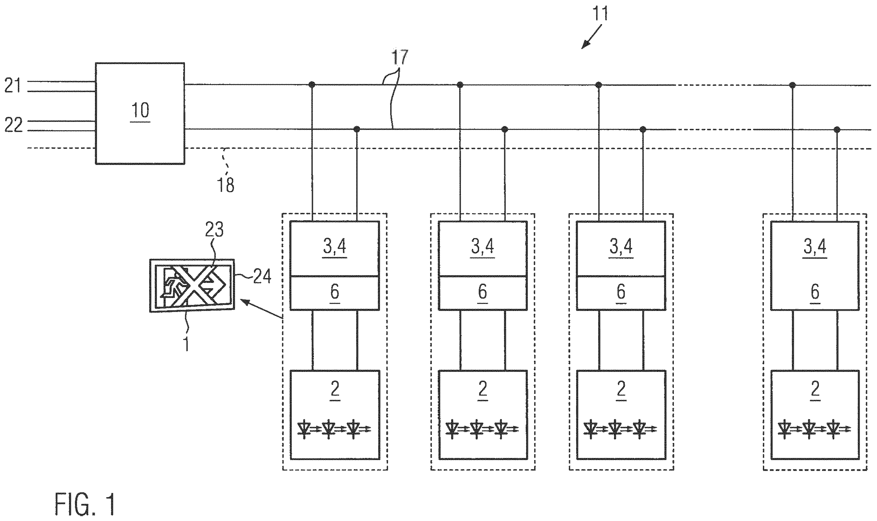

Figur 1 zeigt eine Leuchte 1, die mit ihren wesentlichen Bauteilen dargestellt ist. Es fehlen weitere Bauteile, wie beispielsweise ein Gehäuse, ein Piktogramm, optische Bauteile wie beispielsweise Spiegel, eine Lichtverteilplatte oder dergleichen.

Die Leuchte 1 weist zumindest eine Anzahl von LEDs 2 auf, die Licht in einer bestimmten Richtung abgeben. Die LEDs 2 sind mit einem LED-Treiber 3 zur Versorgung verbunden. Außer dem LED-Treiber 3 und den LEDs 2 ist außerdem eine Überwachungs- und Steuereinheit 4 in der Leuchte 1 angeordnet. Über diese erfolgt in der Regel die Überwachung und Steuerung der Leuchte, wobei diese auch über entsprechende Anschlüsse 5 für eine Spannungsleitung 17 mit der Überwachungs- und Steuereinheit 4 verbunden sind. Es besteht die Möglichkeit, dass Daten direkt über die Spannungsleitungen 17 übermittelt werden, wobei zusätzlich ebenfalls eine Datenverbindungsleitung 18 vorgesehen sein kann.

Je nach Erfordernis, erfolgt die Versorgung innerhalb der Leuchte über Wechselspannung oder Gleichspannung. Zumindest Überwachungs- und Steuereinheit 4 sowie LED-Treiber 3 können in einem gemeinsamen Gehäuse und auf einer Platine angeordnet sein. Erfindungsgemäß erfolgt eine zusätzliche Anordnung einer Lastausgleichseinrichtung 6. Bei dem dargestellten Ausführungsbeispiel ist diese auf einer Sekundärseite 19 des LED-Treibers 3 angeordnet. Die Lastausgleichseinrichtung 6 weist neben entsprechenden Anschlüssen für Daten einen Steueranschluss für eine Kommunikation mit dem LED-Treiber auf.

Von der Lastausgleichseinrichtung 6 erfolgt die entsprechende weitere Spannungsversorgung der LEDs 2. Insgesamt bilden Lastausgleichseinrichtung 6 und LEDs 2 eine Gesamtlast 7. Diese setzt sich aus den Einzellasten von Lastausgleichseinrichtung 6 bzw. LEDs 2 zusammen. Sind die LEDs in ihrem Normalbetrieb, wird im Prinzip die Gesamtlast von den LEDs bereitgestellt, ohne dass die Lastausgleichseinrichtung 6 eine weitere Last bildet. In umgekehrter Weise kann beispielsweise bei einem Blinkbetrieb, bei dem die LEDs 2 zumindest periodisch ausgeschaltet sind, in diesen Ausschaltphasen die Lastausgleichseinrichtung 6 die Gesamtlast bilden. Dadurch ist im Hinblick auf den LED-Treiber 3 im Wesentlichen sichergestellt, dass dieser immer eine Gesamtlast mit im wesentlichen konstantem Strom versorgen kann.

Die Leuchte 1 weist weiterhin einen Anschluss 8 für eine Notfallstelle 9 auf. Dies ist beispielsweise eine Brandmeldestelle, die über insbesondere potentialfreie Anschlüsse mit dem entsprechenden potentialfreien Anschluss 8 an der Leuchte 1 verbunden ist. Es besteht ebenfalls die Möglichkeit, die Verbindung zwischen Notfallstelle 9 und Leuchte 1 an einer anderen Stelle zusätzlich oder alternativ herzustellen, siehe bspw. entsprechende Anschlüsse 8 zur Verbindung von Notfallstelle 9 und LED-Treiber 3.

Im Wesentlichen sind LED-Treiber 3 und Überwachungs- und Steuereinheit 4 üblicherweise ausgebildet, ohne entsprechende Modifikationen für die erfindungsgemäße Leuchte. Die erfindungsgemäße Leuchte weist insbesondere die Lastausgleichseinrichtung 6 auf, die beispielsweise als steuerbare Stromsenke 12 ausgebildet ist. Eine solche steuerbare Stromsenke kann eine Bypass-Einrichtung 13 und eine Steuerelektronik 14 aufweisen. Die Bypass-Einrichtung 13 weist eine Schalteinrichtung 15 und einen Lastkreis 16 auf. Dieser umfasst beispielsweise einen Widerstand oder einen entsprechenden Transistor, wie Bipolar-Transistor, MOSFET-Transistor, IGBT oder dergleichen. Über die Schalteinrichtung 15 ist bei dem dargestellten Ausführungsbeispiel der Lastkreis 16 einschaltbar, so dass die Lastausgleichseinrichtung 6 einen gewissen Laststrom verbraucht. Es besteht ebenfalls die Möglichkeit, die LEDs vollständig kurzzuschließen, so dass die Gesamtlast durch die Lastausgleichseinrichtung 6 bereitgestellt wird. Weiterhin besteht die Möglichkeit, beispielsweise die Lastausgleichseinrichtung 6 kurzzuschließen oder auszuschalten, so dass die Gesamtlast durch die LEDs 2 gebildet wird.

Die Steuerelektronik 14 dient dazu, die Bypass-Einrichtung entsprechend zu schalten, insbesondere im Hinblick auf einen Moduswechsel der LEDs, der ggf. von der Notfallstelle 9 her initiiert wird.

Erfindungsgemäß besteht ebenfalls die Möglichkeit, kontinuierliche Änderungen der Last aus Seiten der LEDs entsprechend kontinuierlich durch die Lastausgleichseinrichtung 6 mittels der entsprechenden Steuerelektronik 14 auszugleichen.

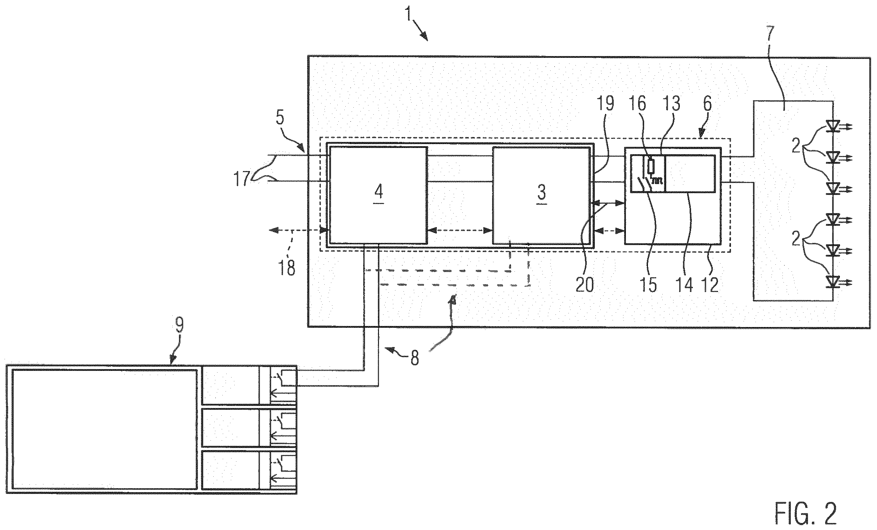

Figur 2 zeigt ein Beleuchtungssystem 11 mit einer Zentraleinheit 10, die beispielsweise mit einer Netzspannungsversorgungquelle 21 und einer Notversorgungsspannungsquelle 22 verbunden ist. Die Netzspannungsversorgungquelle stellt übliche Wechselspannung parat, während von der Notversorgungsspannungsquelle in der Regel Gleichspannung mittels einer Batterie oder einer Vielzahl von Batterien bereitgestellt wird. Auf einer Ausgangsseite der Zentraleinheit 10 sind Versorgungsleitungen 17 angeordnet, die ebenfalls zur Übertragung von Daten verwendet werden können. Es besteht weiterhin die Möglichkeit, eine separate Datenleitung 18 vorzusehen.

Mit den Versorgungsleitungen 17 sind eine Vielzahl von Leuchten 1.1, 1.2, ..., 1.n parallel verbunden. Jede dieser Leuchten ist entsprechend zur Figur 1 ausgebildet. Eine solche Leuchte ist beispielhaft dargestellt. Diese weist ein Piktogramm 24 auf, dem eine Anzeige 23 in Form eines "X" beispielsweise in roter Farbe überlagerbar ist. Dies entspricht einer Rettungszeichenleuchte, die beispielsweise durch entsprechende Rückmeldung von der Notfallstelle 9 nach Figur 1 ihren Modus ändert, wodurch ggf. auch die Belastung des LED-Treibers von den LEDs her verändert wird. Diese Belastung wird erfindungsgemäß durch die Lastausgleichseinrichtung 6 ausgeglichen, so dass unabhängig vom Modus der entsprechenden Leuchte 1 die Gesamtlast relativ zum LED-Treiber 3 im Wesentlichen konstant bleibt.

Jede der Leuchten 1.1, 1.2, ..., 1.n weist als eine erste Last die LEDs 2 und als eine zweite Last die Lastausgleichseinrichtung 6 in Form einer steuerbaren Stromsenke 12 auf, siehe Figur 1. An dieser Stelle sei nochmals angemerkt, dass die Lastausgleichseinrichtung nahezu jede aktive oder passive Komponente beinhalten kann, die als elektrische Last für Wechselspannung oder Gleichspannung dienen kann. Entsprechende passive Komponenten sind beispielsweise Widerstände und aktive Komponenten sind Transistoren wie Bipolar-Transistor, MOSFET-Transistor oder IGBT, die alle als entsprechende elektrische Last einsetzbar sind, wobei diese elektrische Last so gesteuert wird, dass sich insgesamt ein konstanter Laststrom ergibt. Die Lastausgleichseinrichtung kann sowohl auf der Eingangsseite als auch auf der Ausgangsseite des LED-Treibers angeordnet werden. Bevorzug ist eine Anordnung auf der Ausgangsseite, d.h., auf der Gleichspannungsseite, da dort ein Ausgleich zwischen Leistungsverbrauch von LED-Last und Lastausgleichseinrichtung einfacher durchzuführen ist.

Durch die Lastausgleichseinrichtung wird ein bestimmter Teil zusätzlich zum LED-Teil des Ausgabestroms des LED-Treibers übernommen, so dass dadurch im Wesentlichen sichergestellt ist, dass ein entsprechender Eingangsstrom des LED-Treibers sich nicht ändert, selbst wenn sich der Modus der Leuchte ändert, siehe Blinken, Aufblitzen, Dimmen oder dergleichen. Die Kombination aus LED-Last und Lastausgleichseinrichtung bildet die entsprechende Gesamtlast, die im Wesentlichen konstant bleibt. Sich ändernde Betriebsmoden der Leuchte wirken somit nicht auf den Laststrom zurück, so dass ebenfalls keine Beeinflussung einer entsprechenden Stromimpulskommunikation zwischen Leuchte und Zentraleinheit erfolgt.

## Patentansprüche

1. Leuchte (1, 1.1, 1.2, ..., 1.n), insbesondere Rettungszeichen-Sicherheits- oder Notleuchte, mit mehreren LEDs (2), einem LED-Treiber (3) und einer Überwachungs- und Steuereinheit (4), wobei die LEDs (2) mit dem LED-Treiber (3) zur Versorgung verbunden sind, und wobei die Leuchte (1, 1.1, 1.2,..., 1.n) in verschiedenen und auswählbaren Betätigungsmoden einsetzbar ist sowie wenigstens einen Anschluss (5) zur Spannungsversorgung und zum Datenaustausch mittels Stromimpulsen aufweist,
**dadurch gekennzeichnet, dass**
die Leuchte (1, 1.1, 1.2, ..., 1.n) eine Lastausgleichseinrichtung (6) aufweist, wobei die Lastausgleichseinrichtung (6) zusammen mit den LEDs (2) eine Gesamtlast (7) bildet, wobei die Lastausgleichseinrichtung (6) dazu eingerichtet ist, je nach Betätigungsmodus einen bestimmten Teil der Gesamtlast (7) zu übernehmen, so dass sich insgesamt ein im Wesentlichen konstanter Laststrom ergibt.

2. Leuchte nach Anspruch 1, **dadurch gekennzeichnet, dass** die Leuchte (1, 1.1, 1.2, ..., 1.n) einen, insbesondere potentialfreien, Anschluss (8) für eine Notfallstelle (9) aufweist.

3. Leuchte nach Anspruch 2, **dadurch gekennzeichnet, dass** die Leuchte derart eingerichtet ist, dass mittels einer Eingabe an dem, insbesondere potentialfreien, Anschluss (8) ein Betätigungsmodus auswählbar ist.

4. Leuchte nach einem der vorangehenden Ansprüche, **dadurch gekennzeichnet, dass** die Leuchte (1, 1.1, 1.2, ..., 1.n) derart eingerichtet ist, dass sie von einer Zentraleinheit (10) eines Beleuchtungssystems (11) abfragbar ist.

5. Leuchte nach Anspruch 4, **dadurch gekennzeichnet, dass** die Leuchte zur Beantwortung der Abfrage dazu eingerichtet ist, kurze Stromimpulse oder Stromimpulssequenzen zur Zentraleinheit (10) zu übermitteln.

6. Leuchte nach einem der vorangehenden Ansprüche, **dadurch gekennzeichnet, dass** ein Betätigungsmodus der Leuchte (1, 1.1, 1.2, ..., 1.n) auswählbar ist aus Blinkmodus, Aufblitzmodus, Dimmmodus, Einschaltmodus und Ausschaltmodus.

7. Leuchte nach Anspruch 4, **dadurch gekennzeichnet, dass** die Abfragebeantwortung in Form eines Datenpakets übermittelbar ist.

8. Leuchte nach einem der vorangehenden Ansprüche, **dadurch gekennzeichnet, dass** die Lastausgleichseinrichtung (6) eine steuerbare Stromsenke (12) ist.

9. Leuchte nach Anspruch 8, **dadurch gekennzeichnet, dass** die steuerbare Stromsenke (12) zumindest eine Bypass-Einrichtung (13) und eine Steuerelektronik (14) aufweist.

10. Leuchte nach Anspruch 9, **dadurch gekennzeichnet, dass** die Bypass-Einrichtung (13) eine Schalteinrichtung (15) und einen Lastkreis (16) aufweist.

11. Leuchte nach einem der vorangehenden Ansprüche, **dadurch gekennzeichnet, dass** die Lastausgleichseinrichtung (6) auf einer Ausgangsseite (19) des LED-Treibers (3) zwischen diesem und den LEDs (2) verschaltet ist.

12. Leuchte nach einem der vorangehenden Ansprüche, **dadurch gekennzeichnet, dass** die Lastausgleichseinrichtung (6) abschaltbar ist.

13. Leuchte nach Anspruch 6, **dadurch gekennzeichnet, dass** die Lastausgleichseinrichtung (6) umschaltbar ist abhängig von Einschalt- oder Ausschaltmodus der LEDs oder Blink-, Dimm-, Aufblitzmodus der LEDs.

14. Leuchte nach einem der vorangehenden Ansprüche, **dadurch gekennzeichnet, dass** die Betätigungsmoden mittels Steuerinformation über separate Steuereingänge an der Leuchte und/oder über andere Daten-/ Informationskanäle wie Funk, Datenleitung oder Versorgungsspannungsbeeinflussung konfigurierbar sind.

15. Beleuchtungssystem (11) umfassend:
eine Vielzahl von Leuchten (1) nach einem der vorangehenden Ansprüche;
eine Zentraleinheit (10), welche für eine Stromimpulskommunikation mit den Leuchten (1) konfiguriert ist; und
eine Netzspannungs- und Notversorgungsspannungsquelle,
wobei die Zentraleinheit (10) mit der Netzspannungs- und Notversorgungsspannungsquelle eingangsseitig sowie mit der Vielzahl von Leuchten (1) ausgangsseitig verbunden ist, wobei die Leuchten (1, 1.1, 1.2, ..., 1.n) parallel mit der Zentraleinheit (10) über zumindest eine Spannungs- und Datenverbindungsleitung verbunden sind.

## Claims

1. Luminaire (1, 1.1, 1.2, ..., 1.n), in particular an escape sign safety or emergency luminaire, comprising a plurality of LEDs (2), an LED driver (3), and a monitoring and control unit (4), the LEDs (2) being connected to the LED driver (3) for supply, and it being possible for the luminaire (1, 1.1, 1.2, ..., 1.n) to be used in different and selectable actuating modes, and having at least one connection (5) for voltage supply and for data exchange by means of current pulses,
**characterized in that**
the luminaire (1, 1.1, 1.2, ..., 1.n) has a load balancing device (6), the load balancing device (6), together with the LEDs (2), forming a total load (7), the load balancing device (6) being configured to assume a certain portion of the total load (7) depending on the actuating mode, such that a substantially constant load current results overall.

2. Luminaire according to claim 1, **characterized in that** the luminaire (1, 1.1, 1.2, ..., 1.n) has an, in particular floating, terminal (8) for an emergency location (9).

3. Luminaire according to claim 2, **characterized in that** the luminaire is configured in such a way that an actuating mode can be selected by means of an input at the, in particular floating, terminal (8).

4. Luminaire according to any of the preceding claims, **characterized in that** the luminaire (1, 1.1, 1.2, ..., 1.n) is configured in such a way that it can be queried by a central unit (10) of a lighting system (11).

5. Luminaire according to claim 4, **characterized in that** the luminaire for responding to the query is configured to transmit short current pulses or current pulse sequences to the central unit (10).

6. Luminaire according to any of the preceding claims, **characterized in that** an actuating mode of the luminaire (1, 1.1, 1.2, ..., 1.n) can be selected from the blinking mode, flash mode, dimming mode, switch-on mode and switch-off mode.

7. Luminaire according to claim 4, **characterized in that** the query response can be transmitted in the form of a data package.

8. Luminaire according to any of the preceding claims, **characterized in that** the load balancing device (6) is a controllable current sink (12).

9. Luminaire according to claim 8, **characterized in that** the controllable current sink (12) has at least one bypass device (13) and a control electronics unit (14).

10. Luminaire according to claim 9, **characterized in that** the bypass device (13) has a switching device (15) and a load circuit (16).

11. Luminaire according to any of the preceding claims, **characterized in that** the load balancing device (6) is connected to an output side (19) of the LED driver (3) between said LED driver and the LEDs (2).

12. Luminaire according to any of the preceding claims, **characterized in that** the load balancing device (6) can be switched off.

13. Luminaire according to claim 6, **characterized in that** the load balancing device (6) can be switched depending on the switch-on or switch-off mode of the LEDs or the blinking, dimming, flash mode of the LEDs.

14. Luminaire according to any of the preceding claims, **characterized in that** the actuating modes can be configured by means of control information via separate control inputs on the luminaire and/or via other data/information channels such as radio, data line or supply voltage influencing.

15. Lighting system (11) comprising:
a plurality of luminaires (1) according to any of the preceding claims;
a central unit (10) which is configured for current pulse communication with the luminaires (1); and
a mains voltage and emergency supply voltage source,
wherein the central unit (10) is connected on the input side to the mains voltage source and emergency supply voltage source and on the output side to the plurality of luminaires (1), wherein the luminaires (1, 1.1, 1.2, ..., 1.n) are connected in parallel with the central unit (10) via at least one voltage and data connection line.

## Revendications

1. Luminaire (1, 1.1, 1.2, ..., 1.n), en particulier luminaire à pictogramme de sécurité ou de secours, comportant plusieurs DEL (2), un pilote de DEL (3) et une unité de surveillance et de commande (4), dans lequel les DEL (2) sont connectées au pilote de DEL (3) pour l'alimentation, et dans lequel le luminaire (1, 1.1, 1.2,..., 1.n) peut être utilisé dans des modes de fonctionnement différents et sélectionnables et présente au moins un raccordement (5) pour l'alimentation en tension et pour l'échange de données à l'aide d'impulsions de courant,
**caractérisé en ce que**
le luminaire (1, 1.1, 1.2, ..., 1.n) présente un appareil d'équilibrage de charge (6), dans lequel l'appareil d'équilibrage de charge (6) forme une charge totale (7) conjointement avec les DEL (2), dans lequel l'appareil d'équilibrage de charge (6) est configuré pour supporter une partie déterminée de la charge totale (7) en fonction du mode de fonctionnement, de sorte qu'il en résulte globalement un courant de charge sensiblement constant.

2. Luminaire selon la revendication 1, **caractérisé en ce que** le luminaire (1, 1.1, 1.2, ..., 1.n) présente un raccordement (8), en particulier exempt de potentiel, pour un poste en cas d'urgence (9).

3. Luminaire selon la revendication 2, **caractérisé en ce que** le luminaire est configuré de telle sorte qu'un mode de fonctionnement est sélectionnable au moyen d'une entrée au niveau du raccordement (8) en particulier exempt de potentiel.

4. Luminaire selon l'une des revendications précédentes,
**caractérisé en ce que** le luminaire (1, 1.1, 1.2, ..., 1.n) est configuré de telle sorte qu'il peut être interrogé par une unité centrale (10) d'un système d'éclairage (11).

5. Luminaire selon la revendication 4, **caractérisé en ce que,** pour répondre à l'interrogation, le luminaire est configuré pour transmettre des impulsions de courant ou séquences d'impulsions de courant courtes à l'unité centrale (10).

6. Luminaire selon l'une des revendications précédentes,
**caractérisé en ce qu'**un mode de fonctionnement du luminaire (1, 1.1, 1.2, ..., 1.n) est sélectionnable parmi un mode de clignotement, un mode éclair, un mode de gradation, un mode marche et un mode arrêt.

7. Luminaire selon la revendication 4, **caractérisé en ce que** la réponse à l'interrogation peut être transmise sous la forme d'un paquet de données.

8. Luminaire selon l'une des revendications précédentes,
**caractérisé en ce que** l'appareil d'équilibrage de charge (6) est un récepteur de courant (12) pouvant être commandé.

9. Luminaire selon la revendication 8, **caractérisé en ce que** le récepteur de courant (12) pouvant être commandé présente au moins un appareil de dérivation (13) et une électronique de commande (14).

10. Luminaire selon la revendication 9, **caractérisé en ce que** l'appareil de dérivation (13) présente un appareil de commutation (15) et un circuit de charge (16).

11. Luminaire selon l'une des revendications précédentes,
**caractérisé en ce que** l'appareil d'équilibrage de charge (6) est intercalé, sur un côté de sortie (19) du pilote de DEL (3), entre celui-ci et les DEL (2).

12. Luminaire selon l'une des revendications précédentes,
**caractérisé en ce que** l'appareil d'équilibrage de charge (6) peut être désactivé.

13. Luminaire selon la revendication 6, **caractérisé en ce que** l'appareil d'équilibrage de charge (6) peut être commuté en fonction du mode marche ou arrêt des DEL ou du mode de clignotement, du mode de gradation, du mode éclair des DEL.

14. Luminaire selon l'une des revendications précédentes,
**caractérisé en ce que** les modes de fonctionnement peuvent être configurés à l'aide d'informations de commande par l'intermédiaire d'entrées de commande séparées au niveau du luminaire et/ou par l'intermédiaire d'autres canaux de données/d'informations tels que la radio, une ligne de données ou une interférence sur la tension d'alimentation.

15. Système d'éclairage (11) comprenant :
une pluralité de luminaires (1) selon l'une des revendications précédentes ;
une unité centrale (10) qui est configurée pour une communication par impulsions de courant avec les luminaires (1) ; et
une source de tension de réseau et de tension d'alimentation de secours,
dans lequel l'unité centrale (10) est connectée à la source de tension de réseau et de tension d'alimentation de secours côté entrée et à la pluralité de luminaires (1) côté sortie, dans lequel les luminaires (1, 1.1, 1.2, ..., 1.n) sont connectés en parallèle à l'unité centrale (10) par l'intermédiaire d'au moins une ligne de tension et de connexion de données.
